# EUROPEAN PATENT SPECIFICATION

(11) **EP 1 574 710 B1**
(45) Date of publication and mention of the grant of the patent: **16.04.2008**
(21) Application number: 05004036.9
(22) Date of filing: 24.02.2005
(51) Int. Cl.: F04B 27/18

(54) **Control valve for variable displacement compressor**
Regelventil für einen Kompressor mit veränderlicher Verdrängung
Soupape de contrôle pour un compresseur à capacité variable

(30) Priority: 12.03.2004 JP 2004070980
(43) Date of publication of application: 14.09.2005
(73) Proprietor: TGK COMPANY, LTD., Tokyo 193-0942 (JP)
(72) Inventor: Hirota, Hisatoshi, Hachioji-shi Tokyo 193-0942 (JP)
(74) Representative: Grünecker, Kinkeldey, Stockmair & Schwanhäusser Anwaltssozietät

(56) References cited:
- EP-A1- 1 099 578
- EP-A2- 1 106 829
- JP-A- 6 346 845
- JP-A- 7 027 049

## Description

The invention relates to a control valve according to the preamble of claim 1.

A compressor in a refrigeration cycle of an automotive air conditioner is driven by the vehicle engine the rotational speed of which varies depending on a travelling condition of the vehicle. To eliminate the inconvenience that the compressor cannot control its driving speed, a variable displacement compressor is implemented allowing to change the refrigerant discharge amount so as to obtain an adequate refrigerating capacity without being constrained by the rotational speed of the engine.

A known variable displacement compressor (EP-1 106 829 A) comprises a rotatably driven wobble plate on a shaft within a crankcase. The inclination angle of the wobble plate can be changed. Pistons coupled to the wobble plate reciprocate parallel to the shaft by the wobbling motion of the wobble plate and draw refrigerant from a suction chamber into cylinders, compress and discharge it into a discharge chamber. The inclination angle of the wobble plate on the shaft is varied by changing the pressure in the crankcase via a control valve. The strokes of the pistons then are varied accordingly to the change the discharge amounts. In general, the control valve introduces a part of refrigerant at discharge pressure Pd into the gastight crankcase and controls a pressure Pc. The amount of introduced refrigerant is controlled according to the suction pressure Ps in the suction chamber by sensing the suction pressure Ps, and controlling the flow rate into the crankcase, so as to maintain the suction pressure Ps at a constant level. In the known control valve of EP 1 106 829 A, when the solenoid is energised, the plunger is axially directly attracted to a flat end face of the fixed core. In order to assure that the control valve remains open when no current is supplied and the suction pressure is high, an additional strong plunger spring has to be implemented between the fixed core and the plunger. When solenoid is energised the spring force of the plunger spring first has to be overcome before the plunger starts to move the valve element in closing direction. This additional spring components between the cores and the plunger needs a powerful and heavy solenoid and retards the response behaviour of the control valve.

In another type of a solenoid controlled control valve for a variable displacement compressor according to EP 1 099 578 A the control valve is completely closed when no current is supplied to the solenoid. The control valve opens depending on the value of the current supplied and the magnitude of the suction pressure.

Conventional control valves which can be externally controlled also include one type for a so-called clutchless variable displacement compressor the shaft of which is directly coupled to the engine without any disengagable solenoid clutch between the engine and the rotational shaft for adjusting zero discharging capacity (e.g. JP- (Kokai) No. H06-346845). This control valve type comprises a controllable valve section in a passage between the discharge chamber and the crankcase, a bellows integrally connected to the valve element as a pressure-sensing section for opening the valve section when the suction pressure Ps decreases, and a solenoid for generating an electromagnetic force urging the valve section in closing direction with the bellows being fixedly attracted to a movable core. The valve section, the bellows, and the solenoid are arranged in this order. The valve section is basically fully open when the solenoid is de-energised. The pressure Pc in the crankcase can be maintained at a level close to the discharge pressure Pd. The wobble plate is adjusted substantially at a right angle to the rotational shaft. The variable displacement compressor operates with minimum capacity. The discharging capacity then is substantially reduced to approximately zero even though the engine is directly connected to the rotational shaft. As a consequence a solenoid clutch can be dispensed with.

In the conventional control valve the valve element is moved in the valve-opening direction by contraction of the bellows, particularly in the case where due to a heavy refrigeration load, the suction pressure Ps is high, e.g. when the outside temperature is high. This is due to the direct transmission of the expanding and contracting motions of the bellows to the valve element. This prevents that the valve section fully opens even though the solenoid is de-energised.

It is an object of the invention to provide a control valve which is capable of maintaining the minimum operation of the variable displacement compressor, by fully opening the valve section, irrespective of the expanded or compressed state of the bellows, even when the suction pressure of the compressor is high.

The term "body" as used here means a whole body of the control valve. That is, persons skilled in the art sometimes refer to a case accommodating a valve section as a body and regard the same as a separate component from a solenoid case connected to the valve section. However, the term "body" is used here as a super ordinate concept that can include both of the case for a valve section and a case for a solenoid. Further, "the valve element" and "the shaft" either are formed integrally or separately, such that they can be operated in unison by an urging means, such as an elastic member, which urges both in a connecting direction.

The bellows between the shaft connected to the valve section and the core fixed to the body senses the suction pressure. The urging force of the bellows can be transmitted to the valve element via the shaft. The attractive solenoid force is applied to the bellows via the pressing force-transmitting member fixed to the plunger to compress the bellows. This enables the valve section to operate independently of the bellows. More specifically, the attractive force does not act on the plunger when the solenoid is de-energised. Then the bellows expands to be united with the valve section when the suction pressure is low to open the valve section. When the suction pressure is high, the bellows contracts. However, the urging means provided urges the shaft via the pressing force-transmitting member in the valve-opening direction of the valve section such that then the valve section operates independently of the bellows.

When the solenoid is energised, the attractive force acts on the plunger. The bellows is forcibly compressed via the pressing force-transmitting member, which enables the shaft to operate e.g. in the valve-closing direction. Then the valve section can be closed or can be held in a predetermined open position.

When the solenoid of the control valve is de-energised, the shaft is urged in the valve-opening direction via the pressing force-transmitting member independently of the expanding and contracting motions of the bellows. Even when the suction pressure is high, by stopping energization of the solenoid the valve section can be fully opened to thereby maintain the minimum operation of the compressor.

Embodiments of the invention will be described with reference to the drawings. In the drawings is:
- Fig. 1: an axial view of a control valve for a variable displacement compressor (first embodiment),
- Fig. 2: an enlarged axial sectional view of important components of the control valve,
- Fig. 3: a view explaining the operation of essential components of the control valve,
- Fig. 4: another view explaining operations of essential components of the control valve,
- Fig. 5: another view explaining operations of essential components of the control valve,
- Fig. 6: an axial sectional view of another embodiment of a control valve, and
- Fig. 7: an axial sectional view of another embodiment of a control valve.

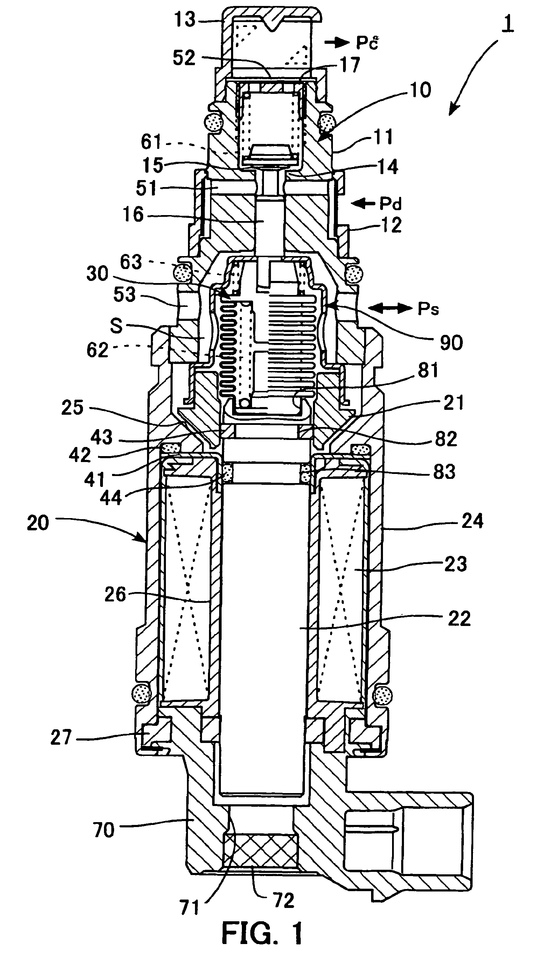

In Fig. 1, a control valve 1 for a variable displacement compressor (not shown) is formed by integrating a valve section 10 into a passage introducing a part of discharged refrigerant into the crankcase. A solenoid 20 controls the flow rate through the valve section 10 by adjusting the valve lift. A bellows 30 interposed between the valve section 10 and the solenoid 20 opens and closes the valve section 10.

The valve section 10 is received in a body 11 having a side port 51 communicating with the discharge chamber (discharge pressure Pd). The port 51 is covered by a strainer 12 and communicates via a refrigerant passage inside the body 11 with a top port 52 capped by a strainer 13. The top portion 52 communicates with the crankcase (controlled pressure Pc).

In the refrigerant passage between the ports 51, 52, a valve seat 14 is integrally formed with the body 11. Opposed to a pressure Pc side of the valve seat 14an axially movable valve element 15 is provided. The valve element 15 is continued downward through a valve hole of the valve seat 14 and is integral with a pressure-sensing piston 16 (shaft) which is axially movably guided in a bore of the body 11. The discharge pressure Pd is introduced to a small-diameter portion between the valve element 15 and the pressure-sensing piston 16. The outer diameter of the pressure-sensing piston 16 is equal to the inner diameter of the valve hole (equal the pressure-receiving areas of the valve element 15 and the pressure-sensing piston 16), such that the upward force of the discharge pressure Pd on the valve element 15 is cancelled by a downward force acting on the pressure-sensing piston 16 to prevent that control actions of the valve section 10 can be adversely affected by the high discharge pressure Pd.

The valve element 15 is urged by a spring 61 (first elastic member) in valve-closing direction. The load of the spring 61 is adjusted by an adjustment screw 17 screwed into the port 52.

In the lower portion of the body 11 a side a port 53 communicates with the suction chamber (suction pressure Ps). The port 53 communicates as well with a pressure-sensing chamber S formed between the valve section 10 and the solenoid 20.

The solenoid 20 includes a plunger 21, a fixed core 22, a solenoid coil 23 for generating a magnetic circuit including the plunger 21 and the core 22 by an electric current externally supplied thereto, and a yoke 24 covering the solenoid coil 23 and forming a case of the solenoid 20.

The yoke 24 is a hollow cylindrical body. The lower end of the body 11 is press-fitted into the upper end of the yoke 24. A housing 70 for a current supply connector is mounted in the other end of the yoke 24. Further, in the vicinity of the upper end, the yoke 24 forms a plunger-opposed portion 25 which extends radially inward and forms a surface which is opposed to a lower surface of the plunger 21. The surface of the plunger-opposed portion 25 has a tapered shape tapering inwardly in an axial direction opposite to the valve section 10.

The solenoid coil 23 is wound around a hollow cylindrical bobbin 26. The core 22 extends through the bobbin 26. The outer periphery of the solenoid coil 23 is surrounded by the yoke 24.

The housing 70 comprises a portion for protecting the outer periphery of the bobbin 26, a portion for accommodating the end of the core 22, and a connector portion, which are integrally formed using a resin. Further, an annular metal plate 27 is inserted in the housing 70. The inner diameter of the plate 27 is slightly smaller than the inner diameter of the bobbin 26, thereby press-fitting a portion of the core 22 therein. The housing 70 and the yoke 24 are fastened to each other e.g. by caulking the lower end of the yoke 24.

At an end of the bobbin 26 facing toward the valve section 10, a collar 41 made of a non-magnetic substance is mounted. The collar 41 has a radial flange and an inner hollow cylindrical body which is press-fitted into a fitting groove formed at the end of the bobbin 26. The radial flange is sandwiched between the plunger-opposed portion 25 and the bobbin 26. Hermeticity between the yoke 24 and the housing 70 is maintained by a packing 42 interposed between a groove formed in the plunger-opposed portion 25 and the radial flange.

The core 22 is a cylindrical body coaxial with the pressure-sensing piston 16 and the bellows 30. An accommodation groove 81 is formed at an extreme end of the core 22 facing the valve section 10, for accommodating an end of the bellows 30. Axially circumferential guide and seal grooves 82, 83 of respective predetermined depths are formed in the core 22 near the accommodating groove 81. A C-shaped guide member 43 made of a resin having a small friction resistance, such as polytetrafluoroethylene, is fitted in the guide groove 82 such that its outer peripheral surface slightly protrudes outward. The purpose of the guide member 43 is to smoothly axially guide the plunger 21. An O-ring 44 is fitted in the seal groove 83, sealing between the seal groove 83 and the inner peripheral surface of the collar 41. The core 22 is axially positioned by adjusting the press-fitted position of the plate 27. The housing 70 contains a through hole 71 communicating with the inside of the bobbin 26. When press-fitting the core 22, the core 22 first is inserted into the bobbin 26 from opposite the housing 70, is press-fitted to a position slightly shifted first more toward the housing 70 than to a predetermined position with respect to the plate 27. Then, the core 22 is pushed toward the valve section 10 by a predetermined tool via the through hole 71 to make a fine adjustment, until the core 22 finally is fixed at the predetermined position. The through hole 71 then is closed by a rubber bush 72.

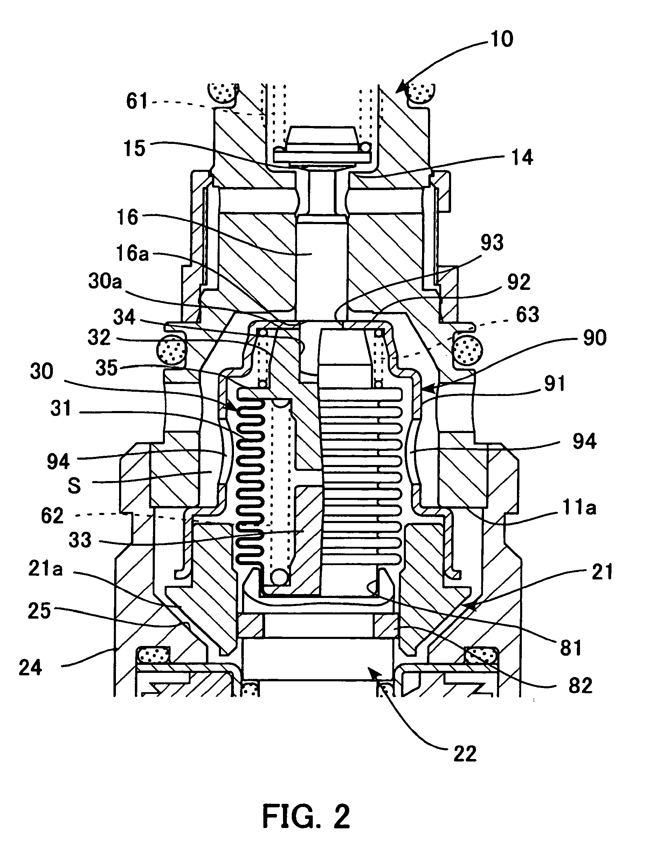

In Fig. 2, the plunger 21 is a hollow cylindrical body which is coaxially slidably guided via the guide member 43 on the end of the core 22 at the side of the bellows 30. An approximate axially central portion of the plunger 21 is expanded radially outward to form a tapered portion 21 a, the outer diameter of which progressively decrease toward an extreme end. The lower surface of the tapered portion 21a has a complementary shape to upper surface of the plunger-opposed portion 25 of the yoke 24. The tapered portion 21 a and the plunger-opposed portion 25 have opposed inclined surfaces. In the magnetic circuit, when generated, there occurs the phenomenon of so-called magnetic leakage by which a radial component is generated which is perpendicular to the axial direction as the proper attracting direction. As a result, when the tapered portion 21 a and the plunger-opposed portion 25 are close to each other the attractive force is reduced. Inversely, when the tapered portion 21 a and the plunger-opposed portion 25 are further distant from each other, even with the same distance between them, the axially shortest distance between the plunger 21 and the yoke 24 becomes smaller, which makes it possible to substantially reduce the magnetic gap. As a result, there is produced a larger attractive force between the opposed surfaces of the tapered portion 21 a and the plunger-opposed portion 25 than an attractive force that would be generated when these surfaces were perpendicular to the axis of the core 22. As a result, it is possible to further increase the attractive force acting when the plunger 21 and the yoke 24 are distant from each other.

A pressing force-transmitting member 90 in the form of a capped hollow cylinder is connected to the side of the plunger 21 remote from the tapered portion 21 a for transmitting the attractive force applied to the plunger 21 to the bellows 30. The pressing force-transmitting member 90 is a hollow cylindrical body 91 surrounding the bellows 30. One end of the member 90 is expanded and press-fitted on the plunger 21. The outer diameter of the expanded part of the body 91 is slightly larger than the inner diameter of an opening at the lower end of the body 11. A stepped portion or shoulder of the expanded part is engaged with the lower end 11 a (engaging part) of the body 11, to restrict the range of the motion of the pressing force-transmitting member 90 toward the valve section 10. The other end of the body 91 is contracted and forms an end wall 92. An insertion hole 93 is formed through the centre of the end wall 92 for a stepped end of the pressure-sensing piston 16. The end wall 92 around the insertion hole 93 provides an outer abutment surface for an opposed surface 16a of the stepped end portion of the pressure-sensing piston 1. The lower side of the end wall 92 forms a pressing surface which can abut against an opposed surface 30a of the bellows 30. A central portion of the body 91 has communication holes 94 for introducing the suction pressure Ps into the inside of the body 91.

The bellows 30 defines a vacuum area within the body 31 and is allowed to expand and to contract axially. The bellows 30 is closed by stoppers 32 and 33. The stopper 32 facing toward the valve section has a circular piston end receiving recess 34 of a predetermined depth, and of an inner diameter approximately equal to the outer diameter of the extreme end of the stepped end portion of the pressure-sensing piston 16. The bellows 30 expands or contracts, while using the extreme end of the pressure-sensing piston 16 inserted in the circular recess 34 as an axial guide.

The other lower stopper 33is fitted and fixed with an outer end face in the accommodation groove 81 of the core 22. A spring 62 urging the bellows 30 in expanding direction is disposed inside the bellows 30 for enabling the bellows 30 to expand when the suction pressure Ps is low. It should be noted that a strong axial force is applied to the bellows 30 in contracting direction, the two stoppers 32 and 33 will come into contact with each other to prevent the bellows 30 from being further compressed.

The stopper 32 has an outer flange 35. A spring 63 (a second elastic member) which urges the pressing force-transmitting member 90 toward the valve section 10 is interposed between the flange 35 and the end wall 92. The spring 63 has a larger spring force than the spring 61, and a smaller spring force than the spring 62. When the solenoid 20 is de-energised (Fig. 2) the spring 63 pushes the pressure-sensing piston 16 upward until the expanded part of the pressing force-transmitting member 90 contacts the lower end 11 a of the body 11. The valve element 15 is held in the fully-open position.

A setting of the load of the spring 62 can be changed by adjusting the press-fitted amount (position) of the core 22 in the solenoid 20 (first adjusting means). A setting of the load of the spring 63 can be changed by adjusting the press-fitted amount (position) of the pressing force-transmitting member 90 on the plunger 21 (second adjusting means).

The whole body of the control valve 1 is formed by the body 11 of the valve section 10, the yoke 24 of the solenoid 20, and the housing 70. The magnetic circuit of the solenoid 20 surrounding the solenoid coil 23 is formed by the plunger 21, the core 22, the plate 27, the yoke 24, and so forth. In other words, when the solenoid 20 is energised, the magnetic circuit is formed via the opposed surfaces of the plunger 21 and the yoke 24 opposed in the moving direction (axial direction) of the plunger 21. At this time, the opposed surfaces of the plunger 21 and the core 22 are parallel to the axis so that the attractive force between the core 22 and plunger 21 hardly fluctuates when the plunger 21 is moved, and hence the axial movement of the plunger 21 is hardly adversely affected.

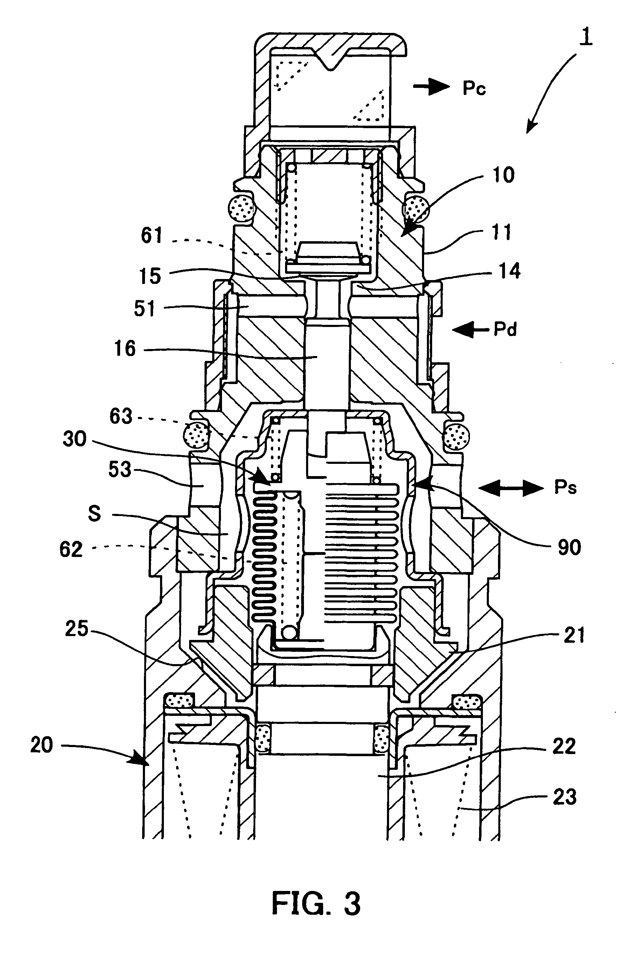

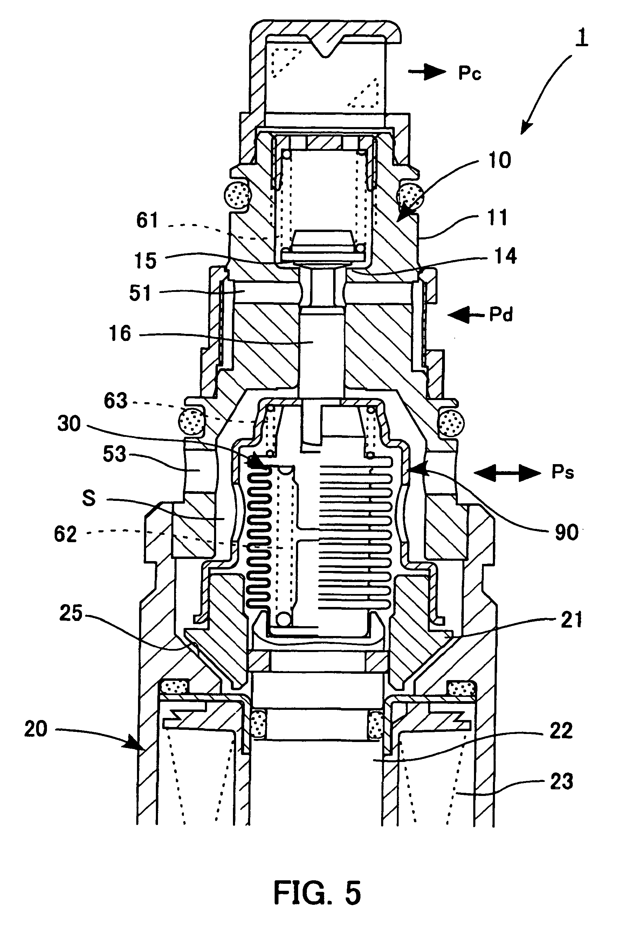

The operation of the control valve 1 will be explained with the help of Figs 3 and 5.

In Fig. 3 the solenoid 20 is de-energised and the suction pressure Ps is high, (the air conditioner is not in operation). The high suction pressure Ps compressed the bellows 30. No attractive force acts on the plunger 21. The pressing force-transmitting member 90 is urged upward by the spring 63, has moved away from the bellows 30, and hence urges the valve element 15 via the pressure-sensing piston 16 into the fully open position. Even when the rotational shaft of the compressor is driven by the engine, the variable displacement compressor is operating with the minimum displacement.

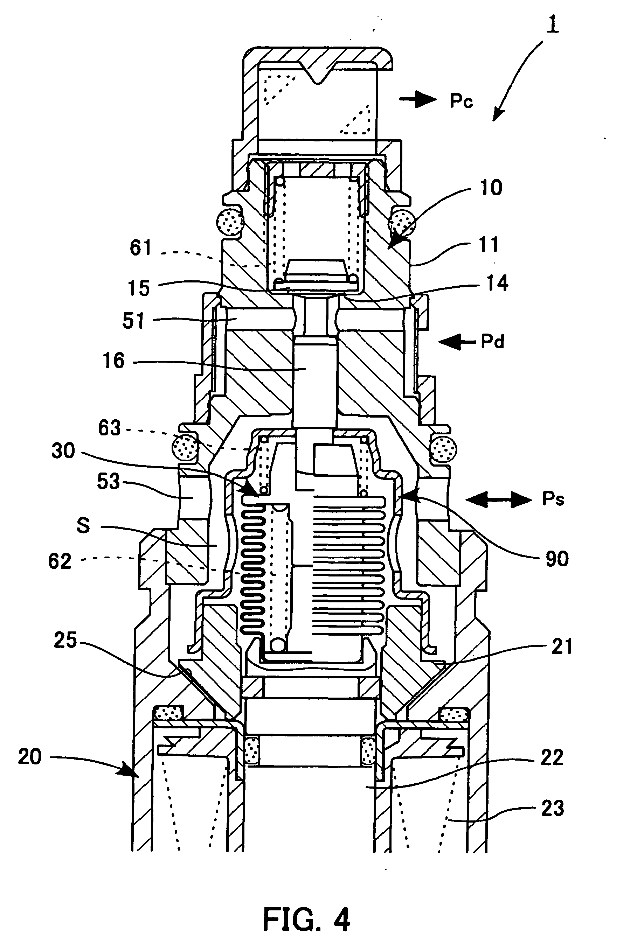

In Fig. 4 maximum control current is supplied to the solenoid coil 23 (s in the case when the automotive air conditioner has been started. The attractive force acts on the plunger 21 and moves the pressing force-transmitting member 90 downward. The urging force acting on the pressure-sensing piston 16 from below is cancelled. The spring 61 pushes the valve element 15 downward on the valve seat 14, to fully close the valve section 10. This blocks the passage to the crankcase. The variable displacement compressor is promptly shifted into the operation with the maximum capacity.

When the compressor continues to operate with maximum capacity this will sufficiently lower the suction pressure Ps even in the pressure-sensing chamber S (Fig. 5), and the bellows 30 will expand and attempt to move upward. If the control current has decreased according to the set temperature of the air conditioner, the pressure-sensing piston 16, the pressing force-transmitting member 90, and the bellows 30 move in unison upward to respective positions where the suction pressure Ps, the loads of the springs 61, 62, and 63, and the attractive force of the solenoid 20 will become balanced. The valve element 15 is pushed upward away from the valve seat 14 to a predetermined valve lift. Refrigerant (discharge pressure Pd) is introduced into the crankcase at a flow rate controlled to a value dependent on the valve lift. The compressor is shifted to an operation with the displacement corresponding to the valve of the control current.

If the control current remains constant, the bellows 30 senses the suction pressure Ps and controls the valve lift of the valve section 10. For example, when the refrigeration load increases to make the suction pressure Ps high, the bellows 30 will contract so that the valve element 15 is also moved downward to decrease the valve lift. The variable displacement compressor operates in a direction of increasing the displacement. When the refrigeration load decreases to make the suction pressure Ps low, the bellows 30 will expand and increase the valve lift. The variable displacement compressor operates in a direction of decreasing the displacement. The control valve controls the displacement of the variable displacement compressor such that the suction pressure Ps remains constant.

When the suction pressure Ps is low, the bellows 30 will expand and will be connected to the pressure-sensing piston 16 via the pressing force-transmitting member 90, so that the valve element 15 and the bellows 30 move in unison. When the suction pressure Ps is high, the bellows 30 will contract. However, the spring 63 urges the pressing force-transmitting member 90 toward the valve element 15, and the valve element 15 operates independently from the bellows 30. That is, with the solenoid 20 de-energised, even when the suction pressure Ps is high, the valve element 15 is pushed upward by the pressing force-transmitting member 90 and the pressure-sensing piston 16 to fully open the valve section 10 and to maintain the minimum operation of the compressor.

By adjusting the axial press-fitted position of the core 22, the spring force of the spring 62 in the bellows 30 can be adjusted. Therefore, as to the adjustment of the elastic force (set value) of the bellows 30 of the control valve 1 to be exerted when it is expanded, there is no need to provide a mechanism designed specifically for the adjustment, such as a shaft or a screw mechanism for pressing the bellows, but the adjustment can be realized at low costs.

Although in the embodiment in Fig.1, the guide groove 82 is formed at the extreme end of the core 22, and the guide member 43 has a square cross section and a small frictional resistance to enable the plunger 21 to slide smoothly, this is not limitative, but another arrangement than this is also possible.

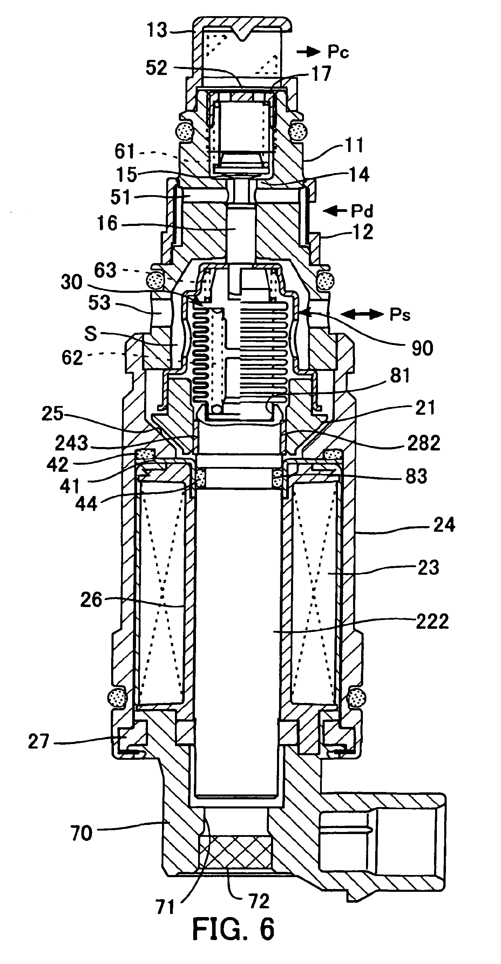

In the embodiment of Fig. 6, a shallow groove 282 is circumferentially formed in an extreme end of a core 222. A small hollow cylindrical sleeve 243 (anti-abrasion means), made of a resin material, such as polytetrafluoroethylene, is disposed in the groove 282.

With this arrangement, the thickness of the anti-abrasion means is reduced considerably, whereby the width of a magnetic force transmitting gap between the core 22 and the plunger 21 can be reduced.

It should be noted that the guide member 43 and the sleeve 243 instead could be mounted in a groove formed in the plunger 21.

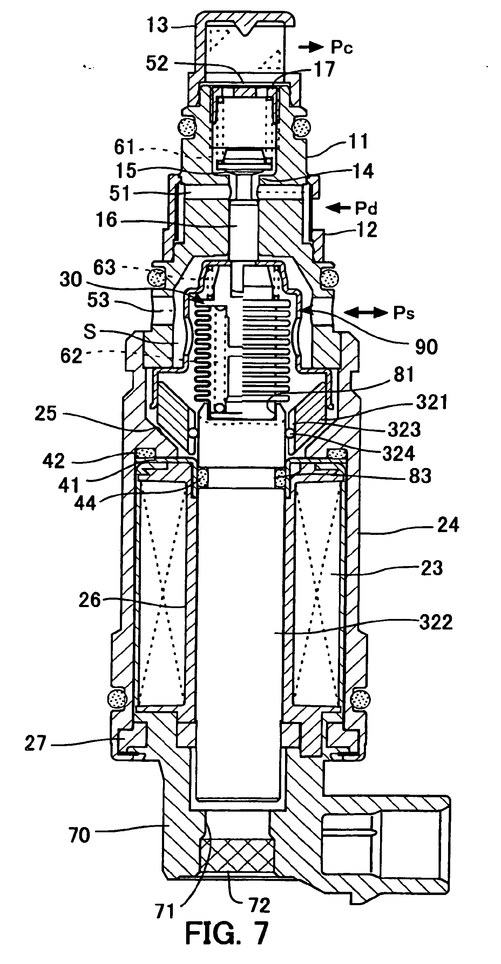

In the embodiment of Fig. 7 a ball bearing structure is applied to the inner peripheral surface of a plunger 321, so as to enable the plunger 321 to smoothly slide on the flat outer peripheral surface of the extreme end of a core 322.

The above arrangement can be realized by forming a tapered annular member which is inclined relative to the axis in radial inward direction, by so-called fine blanking processing or the like, and by forming narrow grooves 323 in the inner peripheral surface of the annular member such that they extend axially at circumferentially predetermined spaced intervals, and disposing balls 324 in the narrow grooves 323. Although not shown explicitly, the narrow grooves 323 of the member can be prevented from dropping off the balls 324 e.g. by caulking the respective axial ends.

Here the plunger 321, and hence the pressing force-transmitting member 90 slide smoothly. It also is possible to prevent or suppress abrasion of the plunger 321 and the core 322 to increase their service lives. A setting value of the load of the spring 63 can be changed by adjusting the press-fitted amount (position) of the pressing force-transmitting member 90 with respect to the plunger 321.

For the pressing force-transmitting member 90 in Fig. 2, which abuts at the ends of the pressure-sensing piston 16 and the bellows 30, depending on the motion of the plunger 21, any other arrangement than the illustrated example can be employed. The pressing force-transmitting member 90 even may be formed integrally with the plunger 21.

The extreme stepped end of the pressure-sensing piston 16 does not need to be inserted into the circular recess 34 in the stopper 32 of the bellows 30 as shown, but inversely a groove may be formed instead in the pressure-sensing piston 16, such the extreme end of the bellows 30 may be inserted in this groove. Alternatively, the pressure-sensing piston 16 and the bellows 30 may have respective end faces which simply are brought into contact with each other via the pressing force-transmitting member 90, instead of being fitted to each other. The end wall of the pressing force-transmitting member 90 then may be interposed without the insertion hole 93 between the pressure-sensing piston 16 and the bellows 30.

Also the valve element 15 and the pressure-sensing piston 16 do not need to be integral with each other. Instead, the valve element may be configured e.g. by a ball valve or the like such that the ball valve can be supported by a shaft replacing the pressure-sensing piston 16.

## Claims

1. A control valve of a variable displacement compressor for varying a refrigerant discharge amount by controlling a pressure (Pc) in a compressor crankcase, comprising:
a body (11) having refrigerant passages,
a valve section (10) including a valve element (15) and a valve seat (14) in the body (11) for adjusting the flow rate of a part of discharged refrigerant flowing into the compressor crankcase, an urging means (61) urging the valve element (15) in valve closing direction, a shaft (16) axially slidably supported by the body (11) and axially supporting the valve element (15),
a solenoid (20) including a cylindrical core (22) fixed to the body (11), a hollow cylindrical plunger (21) movable relative to the core (22) within the body (11), a solenoid coil (23) surrounding the core (22) for generating a magnetic circuit via the plunger and the core by electric current,
an expandable and contractable bellows (30) disposed in a pressure-sensing chamber (S) formed in the body (11) between the valve section (10) and the solenoid (20) for sensing a compressor suction pressure (Ps) and for urging the shaft (16) in opening direction of the valve section (10),
a pressing force-transmitting member (90) fixed to the plunger (21) and configured to abut against the bellows (30) and to transmit a force on the bellows (30) in an axial bellows compressing direction according to an attractive force applied to the plunger (21) when the solenoid (20) is energized, and
urging means (63) urging the shaft (16) in valve opening direction of the valve section (10) via the pressing force-transmitting member (90) irrespective of an expanded or compressed state of the bellows (30),
**characterized in that**
a yoke (24) surrounding the solenoid coil (23) forms a plunger-opposed portion (25) of the magnetic circuit which portion (25) extends radially inward between the solenoid coil (23) and the plunger (21), the portion (25) having a surface opposed to a lower surface of the plunger (21),
the plunger (21) is coaxially inserted around an end of the core (22) on a bellows side and has an axial surface (21 a) opposed to the surface of the plunger-opposed portion (25) of the yoke (24), and
the attractive force is generated in axial direction between the plunger (21) and the portion (25) of the yoke (24).

2. The control valve according to claim 1, **characterised in that** the urging means includes:
a first elastic member (61) urging the valve element (15) in valve-closing direction; and
a second elastic member (63) between the pressing force-transmitting member (90) and the bellows (30), for urging the pressing force-transmitting member (90) in opening direction of the valve section (10), the second elastic member (63) having a larger elastic force than the first elastic member (61), and
that, when the solenoid (20) is energised, the pressing force-transmitting member (90) is moved by a motion of the plunger (21) in the direction of compressing the bellows (30) against the urging force of the second elastic member (63).

3. The control valve according to claim 2, **characterised in that** the pressing force-transmitting member (90) comprises:
a body (91) fixed to the plunger (21), and surrounding the bellows (30);
a pressing surface for abutting against a surface (30a) of the bellows (30) opposed to the shaft (16); and
an abutment surface for abutting against a surface (16a) of the shaft (16) opposed to the bellows (30), and
that when the solenoid (20) is energised, the pressing force-transmitting member (90) urges the bellows (30) via the pressing surface in a direction away from the valve section (10).

4. The control valve according to claim 3, **characterised in that** the body (11) if formed with an engaging part (11 a) engaging with the pressing force-transmitting member (90) to stop the motion of the pressing force-transmitting member (90) toward the valve element (15) at a predetermined position, and
that the control valve comprises adjusting means for adjusting a position of the bellows (30) while supporting the bellows (30) on an side thereof opposite to the shaft (16), so as to set a reference value of the elastic force of the bellows (30) when the pressing force-transmitting member (90) engages with the engaging part (11a).

5. The control valve according to claim 4, **characterised in that** the bellows (30) is supported by one axial end face of the fixed core (22), and
that the adjusting means sets the reference value of the elastic force by adjusting an axial position of the fixed core (22) to the body (11).

6. The control valve according to claim 3, **characterised by** second adjusting means for adjusting another position where the plunger (21) and the pressing force-transmitting member (90) are fixed, for setting an axial position of the pressing surface when the solenoid (20) is energised.

7. The control valve according to claim 1, **characterised in that** anti-abrasion means (43, 243, 323) is circumferentially provided on one of the core (22, 322, 222) and the plunger (21, 321), and that the plunger (21, 321) is slidably guided by the anti-abrasion means relative to the core.

8. The control valve according to claim 7, **characterised in that** the anti-abrasion means (323) comprises an axial ball bearing arrangement.

9. The control valve according to claim 7, **characterised in that** the opposed surfaces (21 a) of the plunger (21) and of the yoke (24) have shapes which are tapered and are complementary to each other.

## Patentansprüche

1. Steuerventil eines Kompressors mit variabler Verdrängung zum Variieren der Kältemittelverdrängungsmenge durch Steuern eines Drucks (Pc) in einem Kompressor-Kurbelgehäuse, mit:
Einem Kältemittelpassagen aufweisenden Körper (11),
einer Ventilsektion (10) einschließlich eines Ventilelements (15) und eines Ventilsitzes (14) in dem Körper (11) zum Einstellen der Strömungsrate eines Teils des abgegebenen Kältemittels, das in das Kompressor-Kurbelgehäuse strömt, eines Beaufschlagungsmittels (61), das das Ventilelement (15) in Ventilschließrichtung beaufschlagt, einer Welle (16), die durch den Körper (11) axial verschiebbar abgestützt wird und das Ventilelement (15) axial abstützt,
einem Magneten (20) einschließlich eines zylindrischen, an dem Körper (11) fixierten Kerns (22), eines hohlen zylindrischen Plungers (21), der im inneren des Körpers (11) relativ zu dem Kern (22) beweglich ist, einer Magnetspule (23), die zum Generieren eines magnetischen Kreises durch elektrischen Strom über den Plunger und den Kern den Kern (22) umgibt,
einem ausdehnbaren und zusammenziehbaren Balg (39), der zum Abgreifen eines Kompressor-Ansaugdrucks (Ps) und zum Beaufschlagen der Welle (16) in Öffnungsrichtung der Ventilsektion (10) in einer in dem Körper (11) ausgebildeten Kammer (S) zwischen der Ventilsektion (10) und dem Magneten (20) angeordnet ist,
einem Druckkraftübertragungsglied (90), das an dem Plunger (21) fixiert und so konfiguriert ist, dass es an dem Balg (30) anliegt und in einer axialen Balgkompressionsrichtung eine Kraft entsprechend einer anziehenden Kraft auf den Balg (30) überträgt, die bei bestromten Magneten (20) auf den Plunger (21) appliziert wird, und
Beaufschlagungsmitteln (63), die die Welle (16) in Ventilöffnungsrichtung der Ventilsektion (10) über das Druckkraftübertragungsglied (90) unabhängig von einem ausgedehnten oder komprimierten Zustand des Balges (30) beaufschlagen,
**dadurch gekennzeichnet, dass**
ein die Magnetspule (23) umgebendes Joch (24) einen dem Plunger gegenüberliegenden Bereich (25) des Magnetkreises bildet, welcher Bereich (25) sich zwischen der Magnetspule (23) und dem Plunger (21) radial einwärts erstreckt, wobei der Bereich (25) eine Oberfläche hat, die einer unteren Fläche des Plungers (21) gegenüberliegt,
der Plunger (21) um ein Ende des Kerns (22) an einer Balgseite koaxial eingesetzt ist und eine axiale Fläche (21 a) besitzt, die der Oberfläche des dem Plunger gegenüberliegenden Bereichs (25) des Joches (24) gegenüberliegt, und
die Anziehungskraft zwischen dem Plunger (21) und dem Bereich (25) des Joches (24) in axialer Richtung generiert wird.

2. Steuerventil gemäß Anspruch 1, **dadurch gekennzeichnet, dass** die Beaufschlagungsmittel umfassen:
Ein erstes, das Ventilelement (15) in Ventilschließrichtung beaufschlagendes, elastisches Glied (61), und
ein zweites elastisches Glied (63) zwischen dem Druckkraftübertragungsglied (90) und dem Balg (30) zum Beaufschlagen des Druckkraftübertragungsgliedes (90) in Öffnungsrichtung der Ventilsektion (10), wobei das zweite elastische Glied (63) eine größere elastische Kraft als das erste elastische Glied (61) besitzt, und
dass dann, wenn der Magnet (20) bestromt ist, das Druckkraftübertragungsglied (90) durch eine Bewegung des Plungers (21) in Richtung des Zusammendrückens des Balges (30) gegen die Beaufschlagungskraft des zweiten elastischen Gliedes (63) bewegt wird.

3. Steuerventil gemäß Anspruch 2, **dadurch gekennzeichnet, dass** das Druckkraftübertragungsglied (90) umfasst:
Einen an dem Plunger (21) fixierten und den Balg (30) umgebenden Körper (91);
eine Druckfläche zur Anlage gegen eine Oberfläche (30a) des Balges (30), die der Welle (16) gegenüberliegt; derart,
eine Anlagefläche zur Anlage gegen eine Fläche (16a) der Welle (16), die dem Balg (30) gegenüberliegt, und
dass dann, wenn der Magnet (20) bestromt ist, das Druckkraftübertragungsglied (90) den Balg (30) über die Druckfläche in einer Richtung weg von der Ventilsektion beaufschlagt.

4. Steuerventil gemäß Anspruch 3, **dadurch gekennzeichnet, dass** der Körper (11) mit einem angreifenden Teil (11a) ausgebildet ist, der an dem Druckkraftübertragungsglied (90) angreift, um die Bewegung des Druckkraftübertragungsgliedes (90) zu dem Ventilelement (15) an einer vorbestimmten Position anzuhalten, und
dass das Steuerventil Einstellungsmittel aufweist zum Einstellen einer Position des Balges (30), während die Einstellungsmittel den Balg an dessen der Welle (16) abgewandter Seite abstützen, um so einen Referenzwert der elastischen Kraft des Balges (30) zu setzen, wenn das Druckkraftübertragungsglied (90) mit dem angreifenden Teil (11a) in Eingriff ist.

5. Steuerventil gemäß Anspruch 4, **dadurch gekennzeichnet, dass** der Balg (30) durch eine axiale Endfläche des fixierten Kerns (22) abgestützt ist, und
dass die Einstellungsmittel den Referenzwert der elastischen Kraft durch Einstellen einer axialen Position des fixierten Kerns (22) relativ zu dem Körper (11) setzen.

6. Steuerventil gemäß Anspruch 3, **gekennzeichnet durch** zweite Einstellungsmittel zum Einstellen einer anderen Position, an welcher der Plunger (21) und das Druckkraftübertragungsglied (90) fixiert sind, zum Setzen einer axialen Position der Druckfläche bei bestromten Magneten (20).

7. Steuerventil gemäß Anspruch 1, **dadurch gekennzeichnet, dass** ein umfängliches Anti-Abrasionsmittel (43, 243, 323) an einer Komponente von dem Kern (22, 322, 222) und dem Plunger (21, 321) umfänglich vorgesehen ist, und dass der Plunger (21, 321) relativ zu dem Kern durch das Anti-Abrasionsmittel verschiebbar geführt wird.

8. Steuerventil gemäß Anspruch 7, **dadurch gekennzeichnet, dass** das Anti-Abrasionsmittel (323) eine axiale Kugellageranordnung umfasst.

9. Steuerventil gemäß Anspruch 7, **dadurch gekennzeichnet, dass** die gegenüberliegenden Flächen (21 a) des Plungers (21) und des Joches (24) Gestaltungen aufweisen, entsprechend denen sie konisch und zueinander komplementär sind.

## Revendications

1. Soupape de commande pour un compresseur à cylindrée variable permettant de varier la quantité d'évacuation d'un réfrigérant en contrôlant une pression (Pc) dans un carter de compresseur, comprenant :
un corps (11) ayant des passages pour réfrigérant,
une section de soupape (10) comprenant un élément de soupape (15) et un siège de soupape (14) dans le corps (11) pour ajuster le débit d'une partie du réfrigérant évacué s'écoulant dans le carter de compresseur, un moyen de contrainte (61) contraignant l'élément de soupape (15) dans le sens de fermeture de la soupape, un arbre (16) axialement soutenu de manière coulissante par le corps (11) et soutenant axialement l'élément de soupape (15),
un solénoïde (20) comprenant un noyau cylindrique (22) fixé au corps (11), un piston plongeur cylindrique creux (21) pouvant se déplacer par rapport au noyau (22) à l'intérieur du corps (11), une bobine de solénoïde (23) entourant le noyau (22) permettant de générer un circuit magnétique par courant électrique via le piston plongeur et le noyau,
un soufflet expansible et pouvant se contracter (30) disposé dans une chambre de détection de pression (S) formée dans le corps (11) entre la section de soupape (10) et le solénoïde (20) pour détecter une pression d'aspiration du compresseur (Ps) et pour contraindre l'arbre (16) dans le sens d'ouverture de la section de soupape (10),
un élément de transmission de la force de pression (90) fixé au piston plongeur (21) et configuré pour venir en butée contre le soufflet (30) et pour transmettre une force sur le soufflet (30) dans un sens axial de compression du soufflet selon une force d'attraction appliquée sur le piston plongeur (21) lorsque le solénoïde (20) est mis sous tension, et
un moyen de contrainte (63) contraignant l'arbre (16) dans le sens d'ouverture de soupape de la section de soupape (10) via l'élément de transmission de la force de pression (90) indépendamment de l'état expansé ou comprimé du soufflet (30),
**caractérisée en ce que**
une fourche (24) entourant la bobine de solénoïde (23) forme une partie opposée au piston plongeur (25) du circuit magnétique, laquelle partie (25) s'étend radialement vers l'intérieur entre la bobine de solénoïde (23) et le piston plongeur (21), la partie (25) ayant une surface opposée à une surface inférieure du piston plongeur (21),
le piston plongeur (21) est coaxialement inséré autour d'une extrémité du noyau (22) sur un côté du soufflet et présente une surface axiale (21a) opposée à la surface de la partie opposée au piston plongeur (25) de la fourche (24), et
la force d'attraction est générée dans le sens axial entre le piston plongeur (21) et la partie (25) de la fourche (24).

2. Soupape de commande selon la revendication 1, **caractérisée en ce que** les moyens de contrainte comprennent :
un premier élément élastique (61) contraignant l'élément de soupape (15) dans le sens de fermeture de la soupape ; et
un second élément élastique (63) entre l'élément de transmission de la force de pression (90) et le soufflet (30), permettant de contraindre l'élément de transmission de la force de pression (90) dans le sens d'ouverture de la section de soupape (10), le second élément élastique (63) ayant une force élastique supérieure au premier élément élastique (61) et
**en ce que**, lorsque le solénoïde (20) est mis sous tension, l'élément de transmission de la force de pression (90) est déplacé par un mouvement du piston plongeur (21) dans le sens de compression du soufflet (30) contre la force de contrainte du second élément élastique (63) .

3. Soupape de commande selon la revendication 2, **caractérisée en ce que** l'élément de transmission de la force de pression (90) comprend :
un corps (91) fixé au piston plongeur (21), et entourant le soufflet (30) ;
une surface de pression pour venir en butée contre une surface (30a) du soufflet (30) opposée à l'arbre (16) ; et
une surface de butée pour venir en butée contre une surface (16a) de l'arbre (16) opposée au soufflet (30), et
**en ce que**, lorsque le solénoïde (20) est mis sous tension, l'élément de transmission de la force de pression (90) contraint le soufflet (30) via la surface de pression dans un sens opposé à la section de soupape (10).

4. Soupape de commande selon la revendication 3, **caractérisée en ce que** le corps (11), s'il est formé avec une partie de mise en prise (11a) se mettant en prise avec l'élément de transmission de la force de pression (90) pour arrêter le mouvement de l'élément de transmission de la force de pression (90) vers l'élément de soupape (15) à une position prédéterminée, et
**en ce que** la soupape de contrôle comprend un moyen d'ajustement permettant d'ajuster une position du soufflet (30) tout en soutenant le soufflet (30) sur un côté de celui-ci opposé à l'arbre (16), de manière à déterminer une valeur de référence de la force élastique du soufflet (30) lorsque l'élément de transmission de la force de pression (90) entre en prise avec la partie de mise en prise (11a).

5. Soupape de commande selon la revendication 4, **caractérisée en ce que** le soufflet (30) est soutenu par une face d'extrémité axiale du noyau fixe (22), et
**en ce que** le moyen d'ajustement détermine la valeur de référence de la force élastique en ajustant une position axiale du noyau fixe (22) sur le corps (11).

6. Soupape de commande selon la revendication 3, **caractérisée par** un second moyen d'ajustement permettant d'ajuster une autre position lorsque le piston plongeur (21) et l'élément de transmission de la force de pression (90) sont fixés, pour déterminer une position axiale de la surface de pression lorsque le solénoïde (20) est mis sous tension.

7. Soupape de commande selon la revendication 1, **caractérisée en ce que** les moyens anti-abrasion (43, 243, 323) sont circonférentiellement prévus sur l'un des noyaux (22, 322, 222) et sur le piston plongeur (21, 321), et **en ce que** le piston plongeur (21, 321) est guidé de manière coulissante par les moyens anti-abrasion par rapport au noyau.

8. Soupape de commande selon la revendication 7, **caractérisée en ce que** le moyen anti-abrasion (323) comprend une disposition axiale de roulement à billes.

9. Soupape de commande selon la revendication 7, **caractérisée en ce que** les surfaces opposées (21a) du piston plongeur (21) et de la fourche (24) ont des formes qui sont coniques et complémentaires l'une par rapport à l'autre.
